# EUROPÄISCHE PATENTSCHRIFT

(11) **EP 3 034 212 B1**
(45) Veröffentlichungstag und Bekanntmachung des Hinweises auf die Patenterteilung: **21.06.2017**
(21) Anmeldenummer: 15200396.8
(22) Anmeldetag: 16.12.2015
(51) Int. Cl.: B23B 31/20

(54) **FLEXIBLE FÜHRUNGSBUCHSE**
FLEXIBLE GUIDE BUSHING
MANCHON DE GUIDAGE SOUPLE

(30) Priorität: 18.12.2014 DE 102014018695
(43) Veröffentlichungstag der Anmeldung: 22.06.2016
(73) Patentinhaber: JBS System GmbH, 24119 Kronshagen (DE)
(72) Erfinder: Jeß, Maik, 24119 Kronshagen (DE)
(74) Vertreter: Lobemeier, Martin Landolf

(56) Entgegenhaltungen:
- DE-A1-102013 011 817
- DE-U1-202012 100 886
- US-A- 2 382 060

## Beschreibung

Die Erfindung betrifft eine flexible Führungsbuchse zum Führen einer in einer Drehmaschine zu bearbeitenden Stange mit einer Mehrzahl von gleichartigen, sich axial erstreckenden, im Querschnitt teilkreisringförmigen Backen, die in montiertem Zustand einen zentralen, kreisrunden Durchlass bilden, dessen Durchmesser bei Nichtbelastung der Backen größer als der der von der Drehmaschine zu bearbeitenden Stange ist und die bei Belastung die zu bearbeitende Stange zwischen sich einspannen, und mit sich zwischen den Backen befindenden, auf deren Seitenflächen wirkenden, diese bei Nichtbelastung voneinander beabstandenden Federn.

Derartige flexible Führungsbuchsen dienen dazu, bei Langdreh-Maschinen die zu bearbeitende Stange während des Bearbeitungsvorgangs abzustützen und zu halten. Auf diese Weise werden geringe Bearbeitungs-Toleranzen, insbesondere bei sehr langen und schlanken Werkstücken erzielt, obwohl das Werkstück in großer Entfernung zum Drehwerkzeug gespannt und gehalten wird. Toleranzen des Werkstücks können bei derartigen Führungsbuchsen ausgeglichen und Werkstücke mit geringfügig voneinander abweichenden Durchmessern mit derselben Führungsbuchse gehalten werden.

Bei einer aus der DE 10 2013 011 817 A1 bekannten flexiblen Führungsbuchse der eingangs genannten Art ist zwischen den Backen ein ziehharmonikaartig gefaltetes Federelement angeordnet, dessen Falten sich bei Zusammendrücken der Backen aneinander anlegen. Dies hat zum einen den Nachteil der aufwendigen Fertigung und zum anderen den Nachteil, dass die Führungsbuchse nicht in einfacher Weise von eingedrungener Späne gereinigt werden kann.

Andere Führungsbuchsen sind aus der US 2 382 060 A und der US 2 866 648 A bekannt.

Der Erfindung liegt damit die Aufgabe zugrunde, eine flexible Führungsbuchse der eingangs genannten Art zu schaffen, die bei einfacher Fertigung auf einfache Weise gereinigt werden kann.

Erfindungsgemäß wird diese Aufgabe durch die flexible Führungsbuchse mit den Merkmalen von Anspruch 1 gelöst. Die Unteransprüche geben bevorzugte Ausgestaltungen der Erfindung wieder.

Erfindungsgemäß ist eine flexible Führungsbuchse zum Führen einer in einer Drehmaschine zu bearbeitenden Stange mit einer Mehrzahl von gleichartigen, sich axial erstreckenden, im Querschnitt teilkreisringförmigen Backen vorgesehen, die in montiertem Zustand einen zentralen, kreisrunden Durchlass bilden, dessen Durchmesser bei Nichtbelastung der Backen größer als der der von der Drehmaschine zu bearbeitenden Stange ist und die bei Belastung die zu bearbeitende Stange zwischen sich einspannen, und mit sich zwischen den Backen befindenden, auf deren Seitenflächen wirkenden, diese bei Nichtbelastung voneinander beabstandenden Federn, wobei an jeder der beiden Seitenflächen jeder der Backen das eine Ende einer sich in einer radialen Ebene achsparallel erstreckenden, weg von dieser vorgespannten Blattfeder anliegt, die hinter die an der benachbarten Seitenfläche der ihr benachbarten Backe befestigte Blattfeder diese überlappend greift und wobei die eine Blattfeder an der einen Seitenfläche der einen Backe und die andere Blattfeder an der ihr benachbarten Seitenfläche der anderen Backe fixiert ist.

Insbesondere ist jede der Blattfedern mittels eines im Bereich der Seitenfläche der jeweiligen Backe in die eine Seitenfläche eingebrachten Ansatzbolzens an dieser Seitenfläche anliegend befestigt und die ihr benachbarte Seitenfläche der ihr benachbarten Backe mit einer den Ansatz und den Schaft des Ansatzbolzens der einen Seitenfläche aufnehmenden Aufnahmebohrung versehen.

Bevorzugt sind drei gleichartig ausgebildete Backen vorgesehen.

Speziell ist eine gerade Anzahl von Backen vorgesehen, wobei besonders bevorzugt die beiden Blattfedern einer Backe benachbart derselben Seitenfläche der jeweiligen Backe befestigt sind.

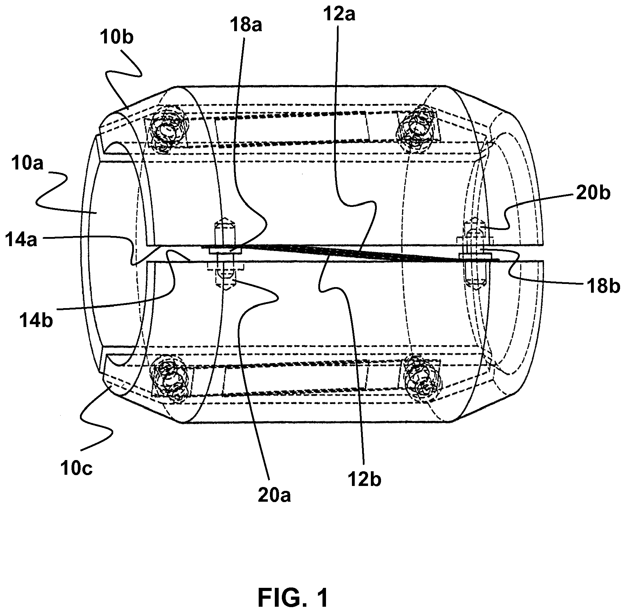

Die Erfindung wird im Folgenden anhand einer Zeichnung erläutert. Dabei zeigt die einzige Figur eine perspektivische Darstellung einer Führungsbuchse mit drei Backen.

Die gezeigte flexible Führungsbuchse weist drei gleichartige, sich axial erstreckende, im Querschnitt teilkreis-ringförmige Backen 10a, 10b, 10c auf. In dem gezeigten nicht belasteten Zustand bilden die Innenflächen der Backen einen kreisrunden Durchlass, dessen Durchmesser größer als der der von der Drehmaschine zu bearbeitenden Stange ist.

An jeder der beiden Seitenflächen 14a, 14b der Backen 10a, 10b, 10c ist im Bereich deren einen Stirnseite eine in einer radialen Ebene liegende Blattfeder 12 a, 12b befestigt, die derart vorgespannt sind, dass sie sich bei Nichtbelastung zunehmend von der Seitenfläche 14a, 14b weg erstrecken. Bei (wie dargestellt) montierter Führungsbuchse greift jede der Blattfedern 12a, 12b der einen Backe 10a, 10b, 10c hinter die andere Blattfeder 12b, 12a der ihr benachbarten Backe 10b, 10a, 10c diese in axialer Richtung überlappend.

Die Blattfedern 12a, 12b sind bei dem dargestellten Ausführungsbeispiel mittels eines im Bereich der Stirnseite eingebrachten, beispielsweise einpressten oder eingeschraubten, Ansatzbolzens 18a, 18b an der Seitenfläche 14a, 14b befestigt. Die andere Seitenfläche 14b, 14a ist mit einer den Ansatz und den Schaft des Ansatzbolzen 18a, 18b der einen Seitenfläche 14a, 14b aufnehmenden Aufnahmebohrung 20a, 20b versehen.

Die eine der Blattfedern 12a ist bei der dargestellten Ausführungsform benachbart der einen Stirnseite der einen Backe 10a und die andere Blattfeder 12b benachbart der anderen Stirnseite der anderen Seitenfläche 14a, 14b der anderen Backe 10b, 10c befestigt. Alternativ ist es insbesondere bei einer geraden Anzahl von Backen auch möglich, die beiden Blattfedern 12a, 12b benachbart derselben Stirnseite der Backen 10a, 10b zu fixieren.

In montiertem Zustand greift die an der einen Seitenfläche 14a befestigte Backe 10a hinter die an der Seitenfläche 14b benachbarten Backe 14b angeordnete Blattfeder 12b. Der Abstand der beiden Seitenflächen 14a, 14b ist damit durch die Vorspannung der Blattfedern 12a, 12b vorgegeben. Die Seitenflächen 14a und 14 können sich nur bei Aufbringen einer gegen die Blattfedern 12a, 12b wirkenden Kraft aufeinander zu oder voneinander weg bewegen. Die Ansatzbolzen 18a, 18b der einen Seitenfläche 14a, 14b, die in die Aufnahmebohrung 20a, 20b in der gegenüberliegenden Seitenfläche 14a, 14b eingreifen, verhindern eine axiale Bewegung der Backen zueinander.

Bei Belastung der Backen 10a, 10b, 10c aufeinander zu, etwa durch das Aufbringen einer axialen Kraft auf die konischen Flächen der Backen im Bereich der Stirnseiten, werden die Seitenflächen 14a, 14b der Backen 12a, 12b aufeinander zu bewegt, wobei die freien Enden der Blattfedern auf die Seitenflächen zu geführt werden, bis diese parallel zu den Seitenflächen 14a, 14b unter Schließen des Spalts zwischen den Backen 10a, 10b, 10c liegen.

Die Montage der flexiblen Führungsbuchse erfolgt, indem die Backen in axialer Richtung bei manueller geringfügiger Spreizung der Backen gegen die Kraft der Blattfedern axial aufeinander zu geführt werden, bis die einen der Blattfedern 12a hinter die andere Blattfeder 12b greift. Wenn die Ansatzbolzen 18a, 18b der einen Backe 10a, 10b, 10c mit den ihnen zugehörigen Aufnahmebohrungen 20a, 20b der benachbarten Backe 10b, 10c, 10a fluchten, greifen diese bei Aufheben der manuellen Spreizung ineinander ein. Die Führungshülse kann so ohne jedes Werkzeug montiert und entsprechend demontiert werden.

Bei der dargestellten Ausführungsform, bei der die eine Blattfeder an der einen Seitenfläche nahe der einen Stirnseite und die andere Blattfeder an der anderen Seitenfläche nahe der anderen Stirnseite befestigt ist, wird bei der Montage die letzte der Backen zunächst an den ihr benachbarten Backen vorbei geführt, bis die freien Enden der Blattfedern einander pasiert haben und selbsttätig hinter einander greifen. Sodann wird die letzte der Backen zurück geschoben, bis die Ansatzbolzen mit den Aufnahmebohrungen fluchten, die manuelle Aufspreizung wird beendet.

Bei Aufbringen einer axial wirkenden Last auf die Konusflächen der Führungshülsen werden die Backen in bekannter Weise aufeinander zu geführt, die Blattfedern werden sich zunehmend parallel zu den Seitenflächen, an denen sie montiert sind, ausrichten.

Die Blattfedern können gewellt ausgebildet sein und so einer axialen Bewegung der Backen gegeneinander entgegenwirken. Auf die Ansatzbolzen und die Aufnahmebohrungen kann bei einer solchen Ausbildung verzichtet werden. Die Blattfedern können auch an einem Späneschutzring befestigt sein.

## Patentansprüche

1. Flexible Führungsbuchse zum Führen einer in einer Drehmaschine zu bearbeitenden Stange mit einer Mehrzahl von gleichartigen, sich axial erstreckenden, im Querschnitt teilkreisringförmigen Backen (10), die in montiertem Zustand einen zentralen, kreisrunden Durchlass bilden, dessen Durchmesser bei Nichtbelastung der Backen (10) größer als der der von der Drehmaschine zu bearbeitenden Stange ist und die bei Belastung die zu bearbeitende Stange zwischen sich einspannen, und mit sich zwischen den Backen (10) befindenden, auf deren Seitenflächen (14) wirkenden, diese bei Nichtbelastung voneinander beabstandenden Federn (12),
**dadurch gekennzeichnet, dass**
an jeder der beiden Seitenflächen (14a, 14b) jeder der Backen (10b, 10c) das eine Ende einer sich in einer radialen Ebene achsparallel erstreckenden, weg von dieser vorgespannten Blattfeder (12a, 12b) anliegt, die hinter die an der benachbarten Seitenfläche (14a, 14b) der ihr benachbarten Backe (10b, 10c) befestigte Blattfeder (12a, 12b) diese überlappend greift,
wobei die eine Blattfeder (12a) an der einen Seitenfläche (14a) der einen Backe (10b) und die andere Blattfeder (12b) an der ihr benachbarten Seitenfläche (14b) der anderen Backe (10c) fixiert ist.

2. Flexible Führungsbuchse nach Anspruch 1, **dadurch gekennzeichnet, dass** jede der Blattfedern (12a, 12b) mittels eines im Bereich der Seitenfläche (14a, 14b) der jeweiligen Backe (10a, 10b) in die eine Seitenfläche (14a, 14b) eingebrachten Ansatzbolzens (18a, 18b) an dieser Seitenfläche (14a, 14b) anliegend befestigt ist und die ihr benachbarte Seitenfläche (14b, 14a) der ihr benachbarten Backe (10b, 10a) mit einer den Ansatz und den Schaft des Ansatzbolzens (18a, 18b) der einen Seitenfläche (14a, 14b) aufnehmenden Aufnahmebohrung (20a, 20b) versehen ist.

3. Führungshülse nach einem der vorhergehenden Ansprüche, **dadurch gekennzeichnet, dass** drei gleichartig ausgebildete Backen (10a, 10b, 10c) vorgesehen sind.

4. Führungshülse nach einem der vorangehenden Ansprüche, **dadurch gekennzeichnet, dass** eine gerade Anzahl von Backen vorgesehen ist.

5. Führungshülse nach Anspruch 4, **dadurch gekennzeichnet, dass** die beiden Blattfedern einer Backe benachbart derselben Seitenfläche der jeweiligen Backe befestigt ist.

## Claims

1. Flexible guide bush for guiding a bar to be machined in a lathe, having a plurality of identically designed, axially extending and, in cross section, pitch circular jaws (10) forming a central, circular passage in mounted state, the diameter of which, when the jaws (10) are not strained, is larger than that of the bar to be machined by the lathe, and which, when strained, clamp the bar to be machined between themselves, and having springs (12) located between the jaws (10), which work on their side surfaces (14) and space these from each other when not strained,
**characterised in that**
on each of the two side surfaces (14a, 14b) of each of the jaws (10b, 10c), one end abuts on a pre-stressed leaf spring (12a, 12b), paraxially extending in a radial plane away from this, which reaches, in overlapping fashion, for the leaf spring (12a, 12b) attached to the adjacent side surface (14a, 14b) of the jaw (1üb, 1üc) adjacent to it,
wherein one leaf spring (12a) is fixed to one side surface (14a) of one jaw (10b) and the other leaf spring (12b) to the adjacent side surface (14b) of the other jaw (10c).

2. Flexible guide bush according to claim 1, **characterised in that** each of the leaf springs (12a, 12b), by means of a shoulder bolt (18a, 18b), inserted into one side surface (14a, 14b) in the area of the side surface (14a, 14b) of the respective jaw (10a, 10b), is attached to this side surface (14a, 14b) in abutting fashion, and that the side surface (14a, 14b) adjacent to it of the jaw (10b, 10a) adjacent to it is provided with a location hole (20a, 20b) receiving the shoulder and the shaft of the shoulder bolt (18a, 18b) of one side surface (14a, 14b).

3. Guide sleeve according to one of the preceding claims, **characterised in that** three identically designed jaws (10a, 10b, 10c) are provided.

4. Guide sleeve according to one of the preceding claims, **characterised in that** an even number of jaws is provided.

5. Guide sleeve according to claim 4, **characterised in that** the two leaf springs adjacent to a jaw are attached to the same side surface of the respective jaw.

## Revendications

1. Douille flexible de guidage pour guider une tige à usiner dans un tour, avec une multitude de mâchoires (10) similaires en forme d'anneaux circulaires gradués transversalement, s'étirant axialement, et qui, lorsqu'elles sont montées, forment un passage central rond dont le diamètre, lorsque les mâchoires (10) ne sont pas sollicitées, est plus grand que celui de la tige qui doit être usinée par le tour et qui, lorsque les mâchoires sont sollicitées, enserrent entre eux la tige à usiner ainsi que les ressorts (12) se trouvant avec eux entre les mâchoires (10) et agissant sur les surfaces latérales (14), et qui sont écartés les uns des autres en l'absence de sollicitation,
**caractérisée en ce que**
une extrémité d'un ressort à lame (12a, 12b) s'étendant sur un plan radial parallèlement à l'axe s'appuie sur chacune des deux surfaces latérales (14a, 14b) de chacune des mâchoires (10b, 10c), en s'éloignant de ce ressort à lame précontraint qui saisit ce dernier en le chevauchant, en passant derrière le ressort à lame (12a, 12b) fixé sur la surface latérale (14a, 14b) adjacente de sa mâchoire adjacente (10b, 10c),
à savoir que l'un des ressorts à lame (12a) est fixé sur une des surfaces latérales (14a) de l'une des mâchoires (10b), et que l'autre ressort à lame (12b) est fixé sur la surface latérale adjacente (14b) de l'autre mâchoire (10c).

2. Douille flexible de guidage selon la revendication 1, **caractérisée en ce que** chacun des ressorts à lame (12a, 12b) est fixé contre cette surface latérale (14a, 14b) à l'aide d'un boulon à épaulement (18a, 18b) inséré dans une des surfaces latérales (14a, 14b) dans la zone de la surface latérale (14a, 14b) de la mâchoire correspondante (10a, 10b), et la surface latérale adjacente (14b, 14a) de la mâchoire adjacente (10b, 10a) est dotée d'un trou de fixation (20a, 20b) accueillant l'extrémité et la tige du boulon à épaulement (18a, 18b) de l'une des surfaces latérales (14a, 14b).

3. Douille de guidage selon une des revendications précédentes, **caractérisée en ce qu'**elle est dotée de trois mâchoires à la forme similaire (10a, 10b, 10c).

4. Douille de guidage selon une des revendications précédentes, **caractérisée en ce qu'**elle est dotée d'un nombre pair de mâchoires.

5. Douille de guidage selon la revendication 4, **caractérisée en ce que** les deux ressorts à lames d'une même mâchoire sont fixés à proximité de la même surface latérale de la mâchoire correspondante.
